# EUROPEAN PATENT SPECIFICATION

(11) **EP 1 587 335 B1**
(45) Date of publication and mention of the grant of the patent: **22.10.2008**
(21) Application number: 04291030.7
(22) Date of filing: 14.04.2004
(51) Int. Cl.: H04Q 7/32

(54) **Neighbour cell measurements during packet mode in wireless communications networks**
Nachbarzellmessungen während Paketvermittlungsbetrieb in drahtlosen Kommunikationsnetzen
Mesures de cellules voisines pendant un mode paquet dans des réseaux de communication sans fil

(43) Date of publication of application: 19.10.2005
(73) Proprietor: MOTOROLA, INC., Schaumburg, IL 60196 (US)
(72) Inventor: Binzel, Charles P, Bristol, WI 53104 (US); Dutrieux, Yann, 31400 Toulouse (FR)
(74) Representative: Cross, Rupert Edward Blount

(56) References cited:
- US-A1- 2002 147 024
- US-B1- 6 331 971
- "Digital cellular telecommunications system (Phase 2+); Radio subsystem link control (3GPP TS 45.008 version 5.11.0 Release 5); ETSI TS 145 008" ETSI STANDARDS, EUROPEAN TELECOMMUNICATIONS STANDARDS INSTITUTE, SOPHIA-ANTIPO, FR, vol. 3-G1, no. V5110, June 2003 (2003-06), XP014010697 ISSN: 0000-0001

## Description

### FIELD OF THE DISCLOSURE

The present disclosure relates generally to wireless communications, and more particularly to neighbor cell measurements during packet mode operation, for example, in General Packet Radio Service (GPRS) enabled mobile stations, and methods.

### BACKGROUND OF THE DISCLOSURE

Wireless mobile communications devices, for example, Global System for Mobile Communications (GSM) mobile stations, in idle mode wake-up periodically from a deep sleep power saving state, in which they are configured most of the time, to monitor a paging channel or a Broadcast Control Channel (BCCH) carrier. The reception window during which the wireless device radio frequency (RF) reception circuits are enabled account for a substantial portion of the power consumed by mobile stations in idle mode. The number and duration of these reception periods impact current drain, and the cumulative result may be a significant decrease in standby time operation of the wireless device.

The "always connected" nature of GPRS, and the corresponding loss of distinction between idle and dedicated mode, results in a significant increase in neighbor cell measurement activity relative to that during standard circuit-switched GSM operation. There is a correlation between neighbor cell measurement activity and power consumption.

The GSM 05.08/3GPP 45.008 specifications set forth the neighbor cell monitoring requirements for a GSM/General Packet Radio Service (GPRS) mobile station. Generally, a GPRS enabled mobile station makes more neighbor cell measurements during packet transfer than when it is in packet idle mode (not transferring packets). In packet idle mode, sub-clause 10.1.1.1 of the specification indicates that the mobile station must obtain at least one signal level measurement for each BCCH carrier every 4 seconds, though the mobile station is not required to obtain more than 1 sample per second for each BCH carrier. In packet transfer mode, known as Temporary Block Flow (TBF), sub-clause 10.1.1.2 of the specification indicates that the mobile station shall continuously monitor all BCCH carriers including that of the serving cell, such that in every TDMA frame a received signal level measurement sample is obtained on at least one of the BCCH carriers, one after another.

Presently, a timer maintains TBF active for a brief time period after the last packet transmission during intermittent packet sessions, for example, when browsing the Internet. The timer, known as T3192, prevents unnecessary setup and TBF allocation if packet transmission resumes before the timer expires. The T3192 time period however is relatively short (80-1500 ms) to prevent the allocation of unused network resources, and it programmable or set by the network operator.

US patent application 2002/147024 discloses a power management system for a mobile unit wherein the frequency of scanning a neighboring cell may be controlled. Power consumed by a mobile unit in the standby mode can be reduced by reducing the frequency the mobile unit scans neighboring cells to determine signal strength.

The aim of the present disclosure is to provide a method for improving neighbor cell measurement rates in a wireless communication device. This is achieved with a method according to claim 1.

The various aspects, features and advantages of the disclosure will become more fully apparent to those having ordinary skill in the art upon careful consideration of the following Detailed Description thereof with the accompanying drawings described below.

### BRIEF DESCRIPTION OF THE DRAWINGS

FIG. 1 is an exemplary wireless communications network.
FIG. 2 is an exemplary block flow diagram for neighbor cell measurement by a packet enabled communication device in a wireless communications network.
FIG. 3 is an exemplary time line illustrating different neighbor cell measurement rates relative to data transfer mode.

### DETAILED DESCRIPTION

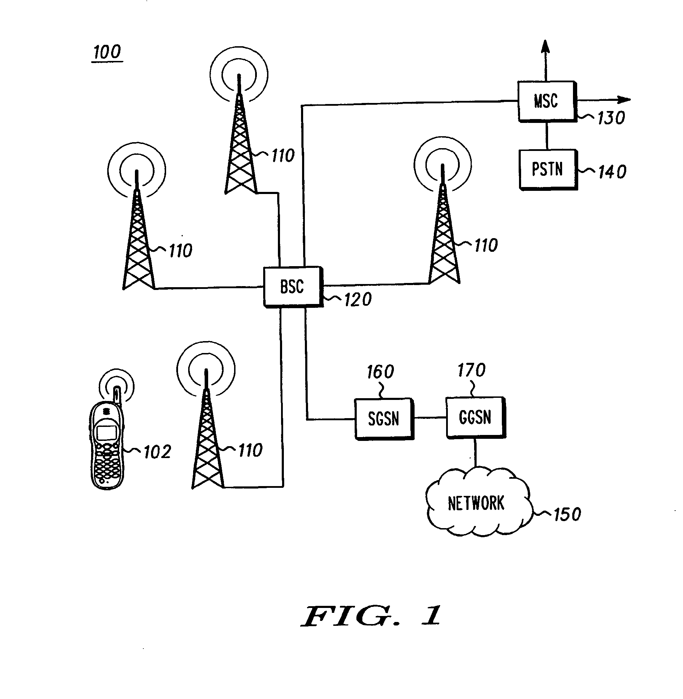

FIG. 1 is a schematic diagram of the exemplary Global System for Mobile Communications (GSM) wireless communications network 100 comprising one or more base-transceiver stations (BTS) 110 providing coverage in corresponding geographical areas communicably coupled to corresponding base station controllers (BCS) 120. Generally there are multiple controllers stations supporting corresponding base transceiver stations located throughout the network.

The base station controllers 120 are coupled to Mobile Switching Controller 130 communicably coupled to a public switched telephone network (PTNS) 140. The base controller 120 may also be coupled to a location register entity, which is well known but not illustrated. The exemplary base station controller 120 is coupled to an external packet network 150, for example, to the Internet, by a Serving GPRS Support Node (SGSN) 160 and a Gateway GPRS Support Node (GGSN) 170.

In other embodiments, the wireless communications network is one other than the exemplary GSM network, for example, a Universal Mobile Telecommunications System (UMTS) W-CDMA network or some other network. Also, in other embodiments, the wireless communications network could be coupled to the external packet by a node or gateway other then those in the exemplary embodiment.

In FIG. 1 a wireless communications device 102 obtains neighbor cell measurements from neighboring base transceiver stations as the mobile station moves about the communications network. Generally the neighbor cell measurement rate differs depending upon whether the communications device is transferring data. For example, GPRS enabled mobile stations make more neighbor signal measurements during packet transfer (TBF mode) than when in packet idle mode (not transferring packets). GSM 05.08/3GPP 45.008 specifications set forth the existing neighbor cell monitoring requirements for a GSM/General Packet Radio Service (GPRS) mobile station, as discussed above in the background of the disclosure.

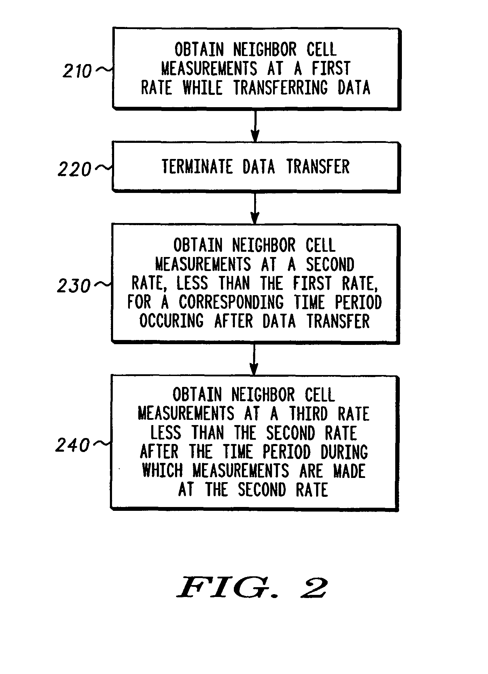

In FIG. 2, at block 210, a data enabled communications device obtains neighbor cell measurements at a first rate during data transfer, for example, during temporary block flow (TBF) mode in GPRS enabled communications devices. At block 220, the data enabled communications device terminates the transfer of data after completion of the data transmission, either to or from the device, or for some other reason. At block 230, after data transmission has terminated, the data enabled communications device obtains neighbor cell measurements at a second rate less than the first rate.

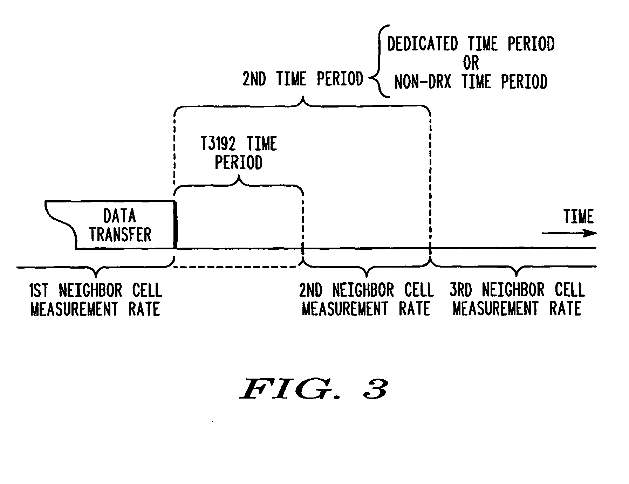

In FIG. 3, according to one exemplary embodiment, upon completion of the data transfer, the cell measurement rate is reduced to a second rate that is less than the first rate during data transfer. In some embodiments, cell selection is performed at the second rate for at least a portion of the period during which data is not transferred, for example, during idle mode. In one exemplary, the second rate is a packet idle rate, for example, the packet idle mode cell measurement rate set forth in sub-clause 10.1.1.1, entitled "Normal Packet Idle Mode", of the GSM 05.08/3GPP 45.008 specifications.

In some embodiments, cell selection occurs at the first rate immediately following data transfer. In the exemplary GPRS enabled handset, cell selection occurs at the first rate during the T3192 time period, which has a relatively short time period, selectable by the network operator for between approximately 80 ms and approximately 1500 ms.

In FIG. 3, the second time period begins generally upon completion of the data transfer. In embodiments where cell selection is performed at the first rate for a period immediately following the end of data transfer, for example, during the T3192 time period, the second time period may begin upon expiration of this time period.

In other embodiments, illustrated in FIG. 2, at block 240, cell selection is performed at a third rate for a portion of the period during which data is not transferred. In one embodiment, the third rate is less than the first and second rates. In FIG. 3, for example, cell selection is performed at the second rate for a corresponding second time period, and thereafter cell selection is performed at the third rate. In one embodiment, illustrated in FIG. 3, the second time period corresponds to a dedicated time period controlled by a dedicated timer, which is executed in or by a soft or firmware-controlled processor. Alternatively, the second time period may be controlled by a hard-wired-circuit or a combination of hardware and software.

In one exemplary dedicated timer implementation, eight nonlinear time periods, selectable by the user or operator, are provided using 3 bits, although additional bits may be used to provide more options. Exemplary time out values are given in Table I below.

**TABLE I**

| Bit | Time Interval |
|---|---|
| 000 | 0 |
| 001 | 5 |
| 010 | 15 |
| 011 | 30 |
| 100 | 60 |
| 101 | Reserved |
| 110 | Reserved |
| 111 | Infinite |

In an exemplary implementation of the 3-bit timer scheme illustrated in Table I, six (6) different time intervals are provided in addition to zero and infinite duration intervals. This allows carriers to tune their network based on loading and typical use. For example, in cells that require minimal neighbor monitoring, the time value could be set to zero (0), which could also be used on lightly loaded systems where the delay between temporary block flows is minimal. An infinite period would allow for special cases when neighbor measurements are relatively unstable. This interval could be started at the expiration of the T3192 period.

In another embodiment, the second time period expires upon expiration of a pre-existing time period rather than based on a dedicated time period. The prior art Non-DRX timer presently requires the communications device to monitor all Packet Common Control Channel (PCCCH), but does not control the cell measurement rate. The non-DRX timer is programmable by the network operator for between 1 and 64 seconds. The Non-DRX period is triggered by the expiration of timer T3192, which was discussed above. The network operator generally controls the duration of the Non-DRX period. In implementations of the disclosure, the second time period corresponds to and expires upon expiration of the pre-existing Non-DRX time period.

FIG. 3 illustrates the second time period as corresponding to the Non-DRX time period. In the exemplary embodiment of FIG. 3, upon expiration of the second time period, cell measurements are made at the third rate, which is less than the second rate. In one embodiment, cell measurements continue at the third rate until packet transfer resumes or until a change in a condition that indicates packet transfer will resume.

In other embodiments, the change between the neighbor cell measurement rates during periods when data is not transferred is based upon a change in a condition of the wireless communications device. In one embodiment, for example, a packet enabled communications device may further decrease the cell measurement rate from the second rate to a third rate based on a change in timing advance, or a change in location of the communications device, or some other detectable condition. In other embodiments, anyone of these or other detectable changing conditions may be used as a basis to change the cell measurement rate from the second or third rate to the first or third rate, respectively. In other embodiments, a change in packet-related activity occurring on the communications device may be used as a basis to change the cell reselection rate. Exemplary packet-related activity includes, for example, the initiation of an application or some other firmware or software that may be indicative of a packet transfer or a cessation of packet transfer. A predictive element may also be used to anticipate when it is desirable to change between different neighbor cell measurement rates.

While the present disclosure and what are presently considered to be the best modes thereof have been described in a manner establishing possession by the inventors and enabling those of ordinary skill in the art to make and use the same, it will be understood and appreciated that there are many equivalents to the exemplary embodiments disclosed herein and that modifications and variations may be made thereto without departing from the scope of the disclosure, which are to be limited not by the exemplary embodiments but by the appended claims.

## Claims

1. A method in a wireless communications device (102), the method comprising the step of starting a first timer for a first time period upon transferring a last packet sent from or received by the wireless communications device, the method being **characterized by** the steps of:
starting a second timer for a second time period upon expiration of the first time period;
obtaining (230) neighbor cell measurements at a first rate during the second time period;
obtaining (240) neighbor cell measurements at a second rate less than the first rate after the second time period.

2. The method of Claim 1, further comprising
starting the second timer for the second time period during packet idle mode,
obtaining (230, 240) the neighbor cell measurements at the second rate during packet idle mode.

3. The method of Claim 1, wherein
the first timer is a T3192 timer,
the method further comprises starting the second timer upon expiration of the first time period of the T3192 timer.

4. The method of Claim 1, further comprising obtaining (210) neighbor cell measurements at a packet transfer rate during packet transfer, the packet transfer rate greater than the first and second rates.

5. The method of Claim 1, further comprising starting the second timer for the second time period different than a non-DRX time period.

6. The method of Claim 1, further comprising starting the second timer for the second time period the same as a non-DRX time period.

7. The method of Claim 1, further comprising changing between the two different neighbor cell measurement rates when in packet idle mode upon expiration of a time period different than a non-DRX time period.

8. The method of Claim 1, further comprising changing between the two different neighbor cell measurement rates when in packet idle mode upon expiration of a non-DRX time period.

9. The method of Claim 1, further comprising changing between the two different neighbor cell measurement rates based upon a change in a condition of the wireless communications device (102).

10. The method of Claim 1, further comprising changing between the two different neighbor cell measurement rates based upon a predicted information.

## Patentansprüche

1. Verfahren in einer drahtlosen Kommunikationsvorrichtung (102), wobei das Verfahren den Schritt des Startens eines ersten Timers für eine erste Zeitperiode nach der Übertragung eines letzten Datenpakets, welches von der drahtlosen Kommunikationsvorrichtung gesendet oder empfangen worden ist, aufweist, wobei das Verfahren durch die folgenden Schritte **gekennzeichnet** ist:
Starten eines zweiten Timers für eine zweite Zeitperiode nach Ablauf der ersten Zeitperiode;
Erhalten (230) von Nachbarzellenmessungen mit einer ersten Geschwindigkeit während der zweiten Zeitperiode;
Erhalten (240) von Nachbarzellenmessungen mit einer zweiten Geschwindigkeit, welche langsamer als die erste Geschwindigkeit ist, nach der zweiten Zeitperiode.

2. Verfahren nach Anspruch 1, welches des Weiteren Folgendes aufweist:
Starten des zweiten Timers für die zweite Zeitperiode während eines Packet-Idle-Mode oder Datenpaket-Ruhezustands;
Erhalten (230, 240) der Nachbarzellenmessungen mit der zweiten Geschwindigkeit während des Packet-Idle-Mode.

3. Verfahren nach Anspruch 1, **dadurch gekennzeichnet, dass**
der erste Timer ein T3192-Timer ist,
wobei das Verfahren des Weiteren das Starten des zweiten Timers nach Ablauf der ersten Zeitperiode des T3192-Timers aufweist.

4. Verfahren nach Anspruch 1, welches des Weiteren den Erhalt (210) von Nachbarzellenmessungen mit einer Paketübertragungsgeschwindigkeit während einer Datenpaketübertragung aufweist,
wobei die Paketübertragungsgeschwindigkeit schneller als die erste und zweite Geschwindigkeit ist.

5. Verfahren nach Anspruch 1, welches des Weiteren das Starten des zweiten Timers für die zweite Zeitperiode aufweist, welche sich von einer non-DRX-Zeitperiode unterscheidet.

6. Verfahren nach Anspruch 1, welches des Weiteren das Starten des zweiten Timers für die zweite Zeitperiode aufweist, welche mit einer non-DRX-Zeitperiode identisch ist.

7. Verfahren nach Anspruch 1, welches des Weiteren einen Wechsel zwischen den beiden unterschiedlichen Nachbarzellen-Messgeschwindigkeiten im Packet-Idle-Mode nach Ablauf einer sich von einer non-DRX-Zeitperiode unterscheidenden Zeitperiode aufweist.

8. Verfahren nach Anspruch 1, welches des Weiteren einen Wechsel zwischen den beiden unterschiedlichen Nachbarzellen-Messgeschwindigkeiten im Packet-Idle-Mode nach Ablauf einer non-DRX-Zeitperiode aufweist.

9. Verfahren nach Anspruch 1, welches des Weiteren einen Wechsel zwischen den beiden unterschiedlichen Nachbarzellen-Messgeschwindigkeiten basierend auf einer Veränderung des Zustands der drahtlosen Kommunikationsvorrichtung (102) aufweist.

10. Verfahren nach Anspruch 1, welches des Weiteren einen Wechsel zwischen den beiden unterschiedlichen Nachbarzellen-Messgeschwindigkeiten basierend auf einer vorhergesagten Information aufweist.

## Revendications

1. Procédé dans un dispositif de communications sans fil (102), le procédé comprenant l'étape consistant à démarrer une première horloge pendant une première période de temps lors du transfert d'un dernier paquet envoyé ou reçu par le dispositif de communications sans fil, le procédé étant **caractérisé par** les étapes consistant à:
démarrer une seconde horloge pendant une seconde période de temps après l'expiration de la première période de temps;
obtenir (230) des mesures de cellules voisines à une première vitesse durant la seconde période de temps;
obtenir (240) des mesures de cellules voisines à une seconde vitesse inférieure à la première vitesse après la seconde période de temps.

2. Procédé selon la revendication 1, comprenant en outre
le démarrage de la seconde horloge pour la seconde période de temps durant le mode paquet inactif,
l'obtention (230, 240) des mesures de cellules voisines à une seconde vitesse durant le mode paquet inactif.

3. Procédé selon la revendication 1, où
la première horloge est une horloge T3192,
le procédé comprend en outre le démarrage de la seconde horloge lors de l'expiration de la première période de temps de l'horloge T3192.

4. Procédé selon la revendication 1, comprenant en outre l'obtention (210) de mesures de cellules voisines à une vitesse de transfert de paquet pendant le transfert de paquet, la vitesse de transfert de paquet étant plus grande que les première et seconde vitesses.

5. Procédé selon la revendication 1, comprenant en outre le démarrage de la seconde horloge pour la seconde période de temps différente d'une période de temps non-DRX.

6. Procédé selon la revendication 1, comprenant en outre le démarrage de la seconde horloge pour la seconde période de temps identique à la période de temps non-DRX.

7. Procédé selon la revendication 1, comprenant en outre le changement entre les deux vitesses de mesures de cellules voisines différentes lorsqu'on se trouve en mode paquet inactif lors de l'expiration d'une période de temps différente d'une période de temps non-DRX.

8. Procédé selon la revendication 1, comprenant en outre le changement entre les deux vitesses de mesures de cellules voisines différentes lorsqu'on se trouve en mode paquet inactif lors de l'expiration d'une période de temps non-DRX.

9. Procédé selon la revendication 1, comprenant en outre le changement entre les deux vitesses de mesures de cellules voisines différentes sur la base d'un changement dans une condition du dispositif de communications sans fil (102).

10. Procédé selon la revendication 1, comprenant en outre le changement entre les deux vitesses de mesures de cellules voisines différentes sur la base d'une information prédite.
